# EUROPÄISCHE PATENTSCHRIFT

(11) **EP 1 201 691 B1**
(45) Veröffentlichungstag und Bekanntmachung des Hinweises auf die Patenterteilung: **01.12.2004**
(21) Anmeldenummer: 01123920.9
(22) Anmeldetag: 06.10.2001
(51) Int. Cl.: C08F 236/10, C09J 113/00

(54) **Fussbodenklebstoffe auf Basis von Styrol-Butadiencopolymerisaten**
Floor adhesives based on styrene-butadiene copolymers
Adhésifs pour revêtement de sol à base de copolymères styrène-butadiène

(30) Priorität: 21.10.2000 DE 10052310
(43) Veröffentlichungstag der Anmeldung: 02.05.2002
(73) Patentinhaber: BASF AKTIENGESELLSCHAFT, 67056 Ludwigshafen (DE)
(72) Erfinder: Christie, David, Dr., #35-01 Suntec Tower One (SG); Pakusch, Joachim, Dr., 67346 Speyer (DE); Wistuba, Eckehardt, Dr., 67098 Bad Dürkheim (DE); Seibert, Horst, 67136 Fussgönheim (DE); Fickeisen, Peter, 67246 Dirmstein (DE)

(56) Entgegenhaltungen:
- EP-A- 0 036 170
- EP-A- 0 182 628
- GB-A- 1 563 236

## Beschreibung

Die Erfindung betrifft die Verwendung einer wäßrigen Zusammensetzung, enthaltend 1 bis 60 Gew.-% eines Polymeren A), aufgebaut aus
a) 10 bis 50 Gew.-% eines Vinylaromaten mit bis zu 20 C-Atomen,
b) 45 bis 75 Gew.-% eines nicht aromatischen Kohlenwasserstoffs mit zwei konjugierten Doppelbindungen,
c) 0 bis 20 Gew.-% eines wasserlöslichen Monomeren mit einer Wasserlöslichkeit von mindestens 100 g pro Liter Wasser bei Normalbedingungen (21°C und 1 bar), wobei das wasserlösliche Monomer keine Säure- oder Säureanhydridgruppe aufweist,
d) 0,1 bis 4,5 Gew.-% eines Monomeren mit mindestens einer Säure- oder Säureanhydridgruppe,
e) 0 bis 30 Gew.-% eines von a) bis d) verschiedenen Monomeren
und 40 bis 99 Gew.-% eines Füllstoffs B), wobei die Gewichtsangaben bezüglich A) und B) auf die Summe von A) und B) bezogen sind, als Fußbodenkleber für Teppichböden oder Bodenbeläge aus PVC, Schaumstoffbeläge mit Textilunterseite, Polyestervlies, Gummibeläge, Textilbeläge, Nadelfilzbodenbeläge, Polydefinbeläge oder Linoleumbeläge.

Wäßrige Dispersionen von Styrol-Butadiencopolymerisaten und ihre Verwendung als Bindemittel in Klebstoffen für Fußbodenbeläge sind aus US 5565511 und US 5962564 bekannt.

In EP-A-620243, EP-A-962510 und WO 9937716 werden Fußbodenklebstoffe und ihre Herstellung beschrieben. Es handelt sich dabei im wesentlichen um Fußbodenklebstoffe auf Basis von Polyacrylaten als Bindemittel, in der Beschreibung werden auch Vinylaromaten und Diene als Monomere, aus denen das Bindemittel bestehen kann, genannt.

Generell sollen Klebstoffe eine gute Adhäsion, d.h. eine gute Haftung zum Substrat und eine gute Kohäsion, d.h. einen guten Zusammenhalt in der Klebstoffschicht, aufweisen. An Klebstoffe für Fußbodenbeläge werden besondere Anforderungen gestellt. Hier ist vor allem ein gutes Naßanzugsvermögen gewünscht. Ein gutes Naßanzugsvermögen bedeutet, daß nach Verlegen z.B. eines Teppichbodens auf den mit der wäßrigen Dispersion beschichteten Untergrund der Teppichboden zunächst noch ausgerichtet und die Lage korrigiert werden kann, dann aber bald eine rutschfeste Verklebung gegeben ist, deren Festigkeit mit fortlaufender Trocknung zunimmt.

Ein gutes Trockenanzugsvermögen bedeutet, daß auch nach längerer Ablüftzeit ein Teppichboden nach Verlegen auf den dann trockenen Untergrund einen festen, rutschfesten Verbund ergibt.

Darüberhinaus ist ein Verzicht auf flüchtige organische Bestandteile, z.B. Lösemittel oder Weichmacher erwünscht, um spätere Belastungen durch entsprechende Emissionen zu vermeiden.

Wichtig ist weiterhin eine gute Verarbeitbarkeit der Bindemittel mit Tackifier-Harzen, z.B. Kolophoniumharzen und eine hohe Stabilität der erhaltenen Formulierungen.

Bisher bekannte Fußbodenklebstoffe auf Basis von Styrol-Butadiencopolymerisaten erfüllen die vielfältigen und unterschiedlichen Anforderungen in diesem Anwendungsgebiet noch nicht im gewünschten Ausmaß.

Aufgabe der vorliegenden Erfindung waren daher Fußbodenklebstoffe auf Basis von Styrol-Butadiencopolymerisaten, welche die oben beschriebenen Anforderungen möglichst gut erfüllen und ein ausgewogenes Eigenschaftsprofil ergeben.

Demgemäß wurde die oben beschriebene Zusammensetzung und ihre Verwendung als Fußbodenklebstoff gefunden.

Die wäßrige Zusammensetzung enthält vorzugsweise

| | |
|---|---|
| 10 bis 45 Gew.-%, | besonders bevorzugt 10 bis 30 Gew.-% des eingangs definierten Polymeren A) und |
| 55 bis 90 Gew.-%, | besonders bevorzugt 70 Gew.-% bis 90 Gew.-% eines Füllstoffs B). |

Die Gewichtsprozente beziehen sich dabei auf die Gewichtssumme aus A) und B).

In einer bevorzugten Ausführungsform enthält die wäßrige Zusammensetzung zusätzlich ein klebrigmachendes Harz C), auch Tackifier genannt.

Die Menge des Tackifiers beträgt vorzugsweise 1 bis 50 Gew.-Teile, besonders bevorzugt 5 bis 30 Gew.-Teile, bezogen auf die 100 Gew.-Teile der Summe aus A)+B.

### Zum Aufbau des Polymeren A):

Der Gewichtsanteil des Monomeren c) im Polymer beträgt vorzugsweise 0,1 bis 20 Gew.-%, besonders bevorzugt 5 bis 15 Gew.-%, bezogen auf das Polymer.

Insbesondere wenn der Gehalt des Monomeren d) nicht mehr als 4 Gew.-% beträgt, ist der Anteil des Monomeren C) 0,1 bis 20 Gew.-%, vorzugsweise 5 bis 15 Gew.-%.

Folgende Zusammensetzungen des Polymeren A) sind darüberhinaus bevorzugt:
a) 10 bis 40 Gew.-%, besonders bevorzugt 20 bis 30 Gew.-%.
b) 50 bis 75 Gew.-%, besonders bevorzugt 55 bis 65 Gew.-%.
c) 0,1 bis 20 Gew.-%, besonders bevorzugt 1 bis 20 Gew.-%.
d) 0,1 bis 4,5 Gew.-%, besonders bevorzugt 0,1 bis 4 Gew.-%.
e) 0 bis 30, besonders bevorzugt 0 bis 10 Gew.-%.

Die Gewichtsangaben zu den Monomeren des Polymer A addieren sich jeweils auf 100 Gew.-%.

Als Monomer a) kommen z.B. Vinyltoluol α- und p-Methylstyrol, α-Butylstyrol und Styrol in Betracht. Bevorzugt ist Styrol.

als Monomere b) kommen z.B. Butadien, Isopren und Chloropren in Betracht. Bevorzugt ist Butadien.

Bevorzugte Monomere c) haben eine Wasserlöslichkeit von mindestens 300 g pro Liter Wasser (21°C, 1 bar), besonders bevorzugt von mindestens 700 g/Liter Wasser.

Bevorzugte Monomere c) sind solche mit einer Nitrilgruppe.

Besonders bevorzugt sind Acrylnitril und Methacrylnitril.

Geeignete Monomere d) sind Acrylsäure, Methacrylsäure, Itaconsäure, Maleinsäure, Fumarsäure und deren Anhydride als Halbester.

Besonders bevorzugt sind Itaconsäure, Acrylsäure, Methacrylsäure.

Besonders bevorzugt handelt es sich bei Monomeren d) um Itaconsäure oder ein Gemisch von Monomeren, welches zumindest zu 20 Gew.-% aus Itaconsäure besteht.

Weitere Monomere e) können z.B. C₁-C₂₀-Alkyl(meth)acrylate, Vinylester mit bis zu 20 C-Atomen, Vinylhalogenide oder andere Monomere sein, soweit sie die Wasserlöslichkeit der Monomere c) nicht erfüllen.

Das Polymer A) hat eine geringe Vernetzungsdichte.

Ein geeignetes Maß für die Vernetzungsdichte ist bei gegebener Monomerenzusammensetzung die transversale kernmagnetische Relaxationszeit der an das Polymerisat chemisch gebundenen Protonen (^{1H}T₂). Sie wurde in dieser Schrift an einer bei 25°C verfilmten und anschließend 2 h bei 80°C getrockneten Probe der jeweiligen wäßrigen Polymerisatdispersion bei einer Probentemperatur von 140°C und einer ¹H-Resonanzfrequenz von 20 MHz ermittelt. Der Zusammenhang zwischen ^{1H}T₂ und der Vernetzungsdichte wird beispielsweise in Macromolecules 1994, 27, 2111 - 2119 aufgezeigt. Er beruht letztlich darauf, daß die transversale kernmagnetische Relaxationszeit eines ein magnetisches Moment aufweisenden Atomkerns einerseits ein Maß für dessen Beweglichkeit in einem äußeren Magnetfeld ist und eine Vernetzung voneinander verschiedener Polymerisatketten deren Beweglichkeit einschränkt. Je geringer die Beweglichkeit einer Polymerisatkette, d.h. je größer die Vernetzungsdichte, desto kürzer ist die transversale kernmagnetische Relaxationszeit von an diese Polymerisatkette chemisch gebundenen, ein magnetisches Moment aufweisenden, Atomkernen.

Beim Polymer A) ist ^{1H}T₂ vorzugsweisek größer 10 ms, besonders bevorzugt größer 12 ms (ms = Millisekunden).

Die Glasübergangstemperatur des Polymeren liegt vorzusweise zwischen -60 und -10°C, insbesondere zwischen -40°C und -15°C und ganz besonders bevorzugt zwischen -15 und -30°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Die Herstellung des Polymeren A) erfolgt im allgemeinen durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, so daß wäßrige Copolymerdispersionen entstehen.

Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweiser Vorlage und Nachdosierung der oder einzelner Bestandteile des Reaktionsgemisches, oder nach dem Dosierverfahren ohne Vorlage durchgeführt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Bevorzugt wird Polymer A) durch Emulsionspolymerisation in Gegenwart von 0,1 bis 5 Gew.-Teilen, besonders bevorzugt 0,5 bis 3,5 Gew.-Teile, besonders bevorzugt 2 bis 3 Gew.-Teile eines Molekulargewichtsreglers, bezogen auf 100 Gew.-Teile Monomere, hergestellt.

### Zu den Füllstoffen B):

Als Füllstoffe B) kommen insbesondere anorganische Füllstoffe in Betracht. Genannt seien z.B. feingemahlene oder gefällte Kreiden mit einem mittleren Teilchendurchmesser von im allgemeinen zwischen 2 und 50 µm und/oder Quarzmehl mit einem üblichen mittleren Teilchendurchmesser von 3 bis 50 µm.

### Zu den klebrigmachenden Harzen C):

Bevorzugte Harze C) sind Harze auf Basis von Abietinsäure oder modifizierter Abietinsäure, z.B. hydrierte oder disproportionierte Abietinsäure oder Ester dieser Verbindungen, mit einer Glasübergangstemperatur von 0 bis 90°C, vorzugsweise 40 bis 85°C.

Derartige Harze C) sind insbesondere als Kolophoniumharze bekannt.

Die erfindungsgemäße Zusammensetzung kann weiterhin Netz- oder Dispergiermittel z.B. für die Füllstoffe, Verdicker und auch z.B. noch weitere übliche Zuschlagstoffe, wie Entschäumer und Konservierungsstoffe enthalten.

Netz- oder Dispergiermittel können z.B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wäßrigen Zusammensetzung enthalten sein. Die Gewichtsangaben beziehen sich dabei auf die Summe aller Bestandteile der wäßrigen Zusammensetzung, mit Ausnahme von Wasser.

Die Zusammensetzung ist vorzugsweise im wesentlichen frei, vorzugsweise frei von organischen Lösungsmitteln und Weichmachern wie z.B. Butylacetat, Toluol oder Phthalsäureester. Sie enthält daher organische Verbindungen mit einem Siedepunkt unterhalb 300°C bei Normaldruck (1 bar) in Mengen unter vorzugsweise 0,5 Gew.-% besonders bevorzugt unter 0,1 Gew.-%, ganz besonders bevorzugt unter 0,05 Gew.% und insbesondere unter 0,01 Gew.-%. Besonders bevorzugt erfüllt die erfindungsgemäße Zusammensetzung bzw. der erfindungsgemäße Fußbodenklebstoff Anforderungen der Emissionsfreiheit, wie sie von der Gemeinschaft Emissionskontrollierter Verlegewerkstoffe definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23°C, 50 % rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in µg/m³ bestimmt, wobei Toluol als Standardsubstanz eingesetzt wird. Emittierte Substanzen, deren Kammerkonzentration größer als 20 µg/m³ ist, werden identifiziert und mit der identifizierten Reinsubstanz und kalibriert. Emittierte Substanzen, deren Kammerkonzentration kleiner als 20 µg/m³ ist, werden nicht einzeln identifiziert. Die Kalibrierung erfolgt in diesen Fällen mit Toluol.

Die Werte aller Substanzen werden addiert.

Im Falle der erfindungsgemäßen Zusammensetzung beträgt der Emissionswert für die Summe aller organischen Verbindungen maximal vorzugsweise 1500 µg/m³, und insbesondere maximal 500 µg/m³.

Die Herstellung der wäßrigen Zusammensetzung kann in einfacher Weise z.B. dadurch erfolgen, daß der bei der Emulsionspolymerisation erhaltenen wäßrigen Polymerdispersion des Polymeren A) die Harze B) und C) und die Füllstoffe und gegebenenfalls weitere Additive unter Rühren zugesetzt werden.

Die Komponenten A), B) und C) sind gut miteinander verarbeitbar, die erhaltenen wäßrigen Zusammensetzungen sind stabil, insbesondere stabil bei Scherung und Lagerung.

Der Wassergehalt der wäßrigen Zusammensetzung liegt im allgemeinen bei 7 bis 50, insbesondere 10 bis 30 Gew.-%, bezogen auf die gesamte wäßrige Zusammensetzung.

Die wäßrige Zusammensetzung eignet sich als Fußbodenkleber, insbesondere zum Verkleben von Bodenbelägen jeglicher Art, insbesondere auch textile Bodenbeläge auf Untergründen, z.B. aus Holz, Kunststoff oder insbesondere mineralischen Untergründen, wie Estrich, Beton oder keramischen Fliesen.

Die wäßrige Zusammensetzung eignet sich als Fußbodenkleber für Teppichböden oder sonstige Bodenbeläge aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rückenausstattung (wie Polyurethanschaum, Styrol-Butadien-Schaum, textiler Zweitrücken), Nadelfilzbodenbeläge, Polyolefinbeläge oder Linoleumbeläge, auf Untergründen wie Holz, Estrich, Beton, keramische Fliesen, Metalluntergründe oder ähnliches.

Der Kleber kann z.B. mit einer Zahnleiste auf den Untergrund aufgetragen werden. Nach dem üblichen Ablüften wird der Bodenbelag eingelegt. Die erfindungsgemäße Klebstoffzusammensetzung weist ein gutes Niveau von anwendungstechnischen Eigenschaften wie Schälfestigkeit, Scherfestigkeit, Naßanzugsvermögen, Trockenanfaßvermögen und Wärmestandfestigkeit auf.

### Beispiele

### I. Wäßrige Zusammensetzung

### 1. Herstellung der Polymeren A) durch Emulsionspolymerisation

Unterschiedliche Polymere A) wurden durch übliche Emulsionspolymerisation hergestellt.

Bei der Emulsionspolymerisation wurde eine Polystyrolsaat (1,5 Gew.-% bezogen auf Monomere) und ein Drittel der Itaconsäuremenge vorgelegt.

Die Polymerisationstemperatur betrug 78°C. Al Initiator wurde natriumpersulfat und als Emulgator Texapon^{R} NSO-ISC aliphatisches, ethoxyliertes Na-Salz) verwendet.

Die Monomeren werden über einen Zeitraum von 5,5 Stunden, die Initiatorlösung über einen Zeitraum von 6 Stunden zudosiert.

Die Zusammensetzung der Polymerisate ist in Tabelle 1 angegeben:

**Tabelle 1:**

| Vergleichsversuche V₁ -V₆ , erfindungsgemäß D1 | | | | | | | |
|---|---|---|---|---|---|---|---|
| | V₁ | V₂ | V₃ | V₄ | V₅ | V₆ | D₁ |
| Bu Gew.-% | 70 | 70 | 70 | 60 | 60 | 60 | 60 |
| S Gew.-% | 25 | 25 | 25 | 25 | 25 | 35 | 26,5 |
| AS Gew.-% | 3,5 | 3,5 | 3,5 | 5 | 3,5 | 3,5 | 2 |
| AN Gew.-% | | | | 10 | 10 | - | 10 |
| IS Gew.-% | 1,5 | 1,5 | 1,5 | | 1,5 | 1,5 | 1,5 |
| tDMK | 2,0 | 1,5 | 1,0 | 2,3 | 2,3 | 2,3 | 2,3 |
| Texapon NSO-IS | 0,75 | 0,75 | 0,75 | 0,75 | 0,75 | 0,75 | 0,75 |
| TG nm | 187 | 172 | 200 | 132 | 188 | 193 | 196 |
| T2 ms | 14,2 | 6,6 | 4,6 | 4,5 | 14,4 | 23,3 | 11 |
| Tg (°C) | -48,6 | -46,3 | -46,8 | -20,8 | -27,1 | -34,6 | -27,7 |
| FG Gew.-% | 51,3 | 51,8 | 51,3 | 53,9 | 48,9 | 53,8 | 57,8 |
| Bu: Butadien S: Styrol AS: Acrylsäure AN: Acrylnitril IS: Itaconsäure tDMK: Molekulargewichtsregler tertiär Dodecylmercaptan (angegeben sind Gew.-Teile auf 100 Gew.-Teil Monomere) FG: Feststoffgehalt TG: Teilchengröße T₂ : transversale kernmagnetische Relaxationszeit als Maß für Vernetzungsdichte (Meßmethode s.o.) Tg: Glasübergangstemperatur | | | | | | | |

### 2. Herstellung der wäßrigen Zusammensetzungen

Die Polymerdispersionen aus V1-V6 und D1 wurden mit den in Tabelle 2 angegebenen Füllstoffen, Tackifiern und weiteren Additiven gemischt. Die Menge der Dispersion wurde dabei so gewählt, dass der Gehalt an Polymer A) gleich war.

**Tabelle 2**

| | | | | | | | |
|---|---|---|---|---|---|---|---|
| V1 | 166 | - | - | | | | |
| V2 | - | 164 | - | | | | |
| V3 | - | - | 166 | | | | |
| V4 | | | | 158,2 | | | |
| V5 | | | | | 174,4 | | |
| V6 | | | | | | 158,6 | |
| D1 | | | | | | | 147,6 |
| Harzschmelze | 70 | 70 | 70 | 70 | 70 | 70 | 70 |
| (Burez LE3004/WW 60:40) | | | | | | | |
| Disponil FES 77 | 2,5 | 2,5 | 2,5 | 2,5 | 2,5 | 2,5 | 2,5 |
| Latekoll D Lsg. 2 %ig | 15,5 | 17,5 | 15,5 | 23,3 | 7,1 | 22,9 | 33,9 |
| Agitan VP 282 | 1 | 1 | 1 | 1 | 1 | 1 | 1 |
| Lumiten NOG | 2,5 | 2,5 | 2,5 | 2,5 | 2,5 | 2,5 | 2,5 |
| Pigmentverteiler NL | 2,5 | 2,5 | 2,5 | 2,5 | 2,5 | 2,5 | 2,5 |
| Lumiten I DS3525 | 1 | 1 | 1 | 1 | 1 | 1 | 1 |
| Burez LE 3004 | 20 | 20 | 20 | 20 | 20 | 20 | 20 |
| Ulmer Weiss XM | 219 | 219 | 219 | 219 | 219 | 219 | 219 |
| Mengenangaben in Gew.-Teilen Burez LE3004/WW 60:40: Tackifier-Harz (Ester der Abietinsäure) der Firma Erbslöh/Blasamharz der Firma Hermann Disponil FES 77: Dispergierhilfsmittel (Henkel) Latekoll: Verdicker (BASF) Agitan: Entschäumer (Firma Münzing) Lumiten NOG Dispergierhilfsmittel (BASF) Pigmentverteiler NL: Dispergierhilfsmittel (BASF) Lumiten I DS3525: Dispergierhilfsmittel (BASF) Ulmer Weiss XM: Füllstoff (Ulmo-Füllstoff-Vertrieb) | | | | | | | |

### II. Anwendungstechnische Prüfung

- Naßanzugsvermögen (NAV)
   Der Klebstoff wird mit einem DIN-Rakel auf eine Zementfaserplatte (z.B. Eternit® 2000) (20 x 50 cm) in Abzugsrichtung ausgetragen. Auftragsmenge ca. 350 - 400 g/m². Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen und dabei die Zunahme des Abschälwiderstandes in N 5 cm bestimmt.
- Trockenanfaßvermögen (TAV)
   Der Klebstoff wird mit DIN-Rakel auf eine Zementfaserplatte (z.B. Eternit® 2000) (20 x 50) in Abzugsrichtung aufgetragen. Auftragsmenge ca. 250 - 300 mg/m². PVC Streifen (Pegulan® B 1) werden nach unterschiedlicher Ablüftzeit in das Kleberbett eingelegt und mit einer 2,5 kg Walze durch Hin- und Herrollen (3x) angepreßt. Anschließend werden die Streifen mit einem Abzugsgerät abgezogen und der Abschälwiderstand in N 5 cm bestimmt.
- Schälfestigkeit

Die Schälfestigkeit wurde bestimmt nach DIN 16860. Bei der Schälfestigkeit werden unterschiedliche Beläge geprüft:
NBB: Nadelvlies-Bodenbelag
Norament: Gummibelag
PO: Polyolefinbelag
PVC: PVC-Belag

Die Ergebnisse sind in Tabelle 3 aufgeführt.

**Tabelle 3:**

| Ergebnisse | | | | | | | |
|---|---|---|---|---|---|---|---|
| Dispersion | V₁ | V₂ | V₃ | V₄ | V₅ | V₆ | D₁ |
| NAV N/5cm 10 min | 4 | 5 | 3 | 3 | 7 | 7 | 10 |
| 15 min | 7 | 7 | 5 | 3 | 12 | 12 | 13 |
| 20 min | 11 | 12 | 8 | 3 | 22 | 15 | 20 |
| 30 min | 18 | 28 | 17 | 8 | 40 | 40 | 40 |
| TAV N/5cm 10 min | 2 | 1 | 1 | 2 | 2 | 1 | 1 |
| 20 min | 5 | 5 | 1 | 1 | 4 | 4 | 8 |
| 30 min | 2 | 2 | 1 | 0 | 3 | 4 | 17 |
| 45 min | 1 | 1 | 0 | | 2 | 3 | 11 |
| Schälfestigkeit NBB (N/mm) 10 min Ablüftzeit) | 1,0 | 1,4 | 1,5 | 1,2 | 2,3 | 1,7 | 1,9 |
| Schälfestigkeit PVC (N/mm) 10 min Ablüftzeit) | 0,5 | 0,3 | 0,3 | 0,4 | 0,9 | 0,8 | 1,1 |
| Schälfestigkeit PO (N/mm) 10 min Ablüftzeit) | 0,6 | 0,3 | 0,2 | 0,4 | 0,4 | 0,7 | 1,7 |
| Schälfestigkeit Norament (N/mm) 10 min Ablüftzeit) | 1,8 | 2,0 | 2,0 | 0,5 | 1,4 | 2,0 | 2,2 |

## Patentansprüche

1. Verwendung einer wässrigen Zusammensetzung, enthaltend 1 bis 60 Gew.-% eines Polymeren A), aufgebaut aus
a) 10 bis 50 Gew.-% eines Vinylaromaten mit bis zu 20 C-Atomen,
b) 45 bis 75 Gew.-% eines nicht aromatischen Kohlenwasserstoffs mit zwei konjugierten Doppelbindungen,
c) 0 bis 20 Gew.-% eines wasserlöslichen Monomeren mit einer Wasserlöslichkeit von mindestens 100 g pro Liter Wasser bei Normalbedingungen (21°C und 1 bar), wobei das wasserlösliche Monomer keine Säure- oder Säureanhydridgruppe aufweist,
d) 0,1 bis 4,5 Gew.-% eines Monomeren mit mindestens einer Säure- oder Säureanhydridgruppe,
e) 0 bis 30 Gew.-% eines von a) bis d) verschiedenen Monomeren
und 40 bis 99 Gew.-% eines Füllstoffs B), wobei die Gewichtsangaben bezüglich A) und B) auf die Summe von A) und B) bezogen sind, als Fußbodenkleber für Teppichböden oder Bodenbeläge aus PVC, Schaumstoffbeläge mit Textilunterseite, Polyestervlies, Gummibeläge, Textilbeläge, Nadelfilzbodenbeläge, Polyolefinbeläge oder Linoleumbelage.

2. Verwendung einer wässrigen Zusammensetzung gemäß Anspruch 1, **dadurch gekennzeichnet, dass** der Gewichtsanteil der Monomeren c) 0,1 bis 20 Gew.-% beträgt.

3. Verwendung einer wässrigen Zusammensetzung gemäß Anspruch 1 oder 2, **dadurch gekennzeichnet, dass** der Gehalt des Monomeren c) 0,1 bis 20 Gew.-% beträgt, und der Gehalt des Monomeren d) 0,1 bis 4 Gew.-% beträgt.

4. Verwendung einer wässrigen Zusammensetzung gemäß einem der Ansprüche 1 bis 3, **dadurch gekennzeichnet, dass** es sich bei Monomeren c) um Monomere mit einer Nitrilgruppe handelt.

5. Verwendung einer wässrigen Zusammensetzung gemäß einem der Ansprüche, **dadurch gekennzeichnet, dass** Polymer A) vernetzt ist und der T 2-Wert (transversale kernmagnetische Relaxationszeit der an das Polymer gebundenen Protonen) als Maß für den Vernetzungsgrad mindestens 10 ms beträgt.

6. Verwendung einer wässrigen Zusammensetzung gemäß einem der Ansprüche 1 bis 5, **dadurch gekennzeichnet, dass** die Glasübergangstemperatur des Polymeren A) -10 bis - 60°C beträgt.

7. Verwendung einer wässrigen Zusammensetzung gemäß einem der Ansprüche 1 bis 6, **dadurch gekennzeichnet, dass** Polymer A) in Form einer wäßrigen Polymerdispersion vorliegt.

8. Verwendung einer wässrigen Zusammensetzung gemäß Anspruch 7, **dadurch gekennzeichnet, dass** die Polymerdispersion erhältlich ist durch Emulsionspolymerisation unter Verwendung von 0,1 bis 5 Gew.-Teilen eines Molekulargewichtsreglers, bezogen auf 100 Gew.-Teile Monomere.

## Claims

1. The use of an aqueous composition containing from 1 to 60% by weight of a polymer A) built up from
a) from 10 to 50% by weight of a vinylaromatic having up to 20 carbon atoms,
b) from 45 to 75% by weight of a nonaromatic hydrocarbon having two conjugated double bonds,
c) from 0 to 20% by weight of a water-soluble monomer having a water solubility of at least 100 g per liter of water under standard conditions (21°C and 1 bar), the water-soluble monomer containing no acid group or acid anhydride group,
d) from 0.1 to 4.5% by weight of a monomer containing at least one acid group or acid anhydride group,
e) from 0 to 30% by weight of a monomer other than a) to d),
and from 40 to 99% by weight of a filler B), the weight data for A) and B) being based on the sum of A) and B), as a flooring adhesive for carpets or floor coverings made from PVC, foam coverings with a textile backing, polyester nonwoven, rubber coverings, textile coverings, needlefelt floor coverings, polyolefin coverings or linoleum coverings.

2. The use of an aqueous composition as claimed in claim 1, wherein the weight fraction of the monomers c) is from 0.1 to 20% by weight.

3. The use of an aqueous composition as claimed in claim 1 or 2, wherein the monomer c) content is from 0.1 to 20% by weight and the monomer d) content is from 0.1 to 4% by weight.

4. The use of an aqueous composition as claimed in any of claims 1 to 3, wherein monomers c) comprise monomers containing a nitrile group.

5. The use of an aqueous composition as claimed in any of the claims, wherein polymer A) is crosslinked and the T₂ value (transverse nuclear magnetic resonance relaxation time of the protons attached to the polymer) as a measure of the degree of crosslinking is at least 10 ms.

6. The use of an aqueous composition as claimed in any of claims 1 to 5, wherein the glass transition temperature of the polymer A) is from -10 to -60°C.

7. The use of an aqueous composition as claimed in any of claims 1 to 6, wherein polymer A) is in the form of an aqueous polymer dispersion.

8. The use of an aqueous composition as claimed in claim 7, wherein the polymer dispersion is obtainable by emulsion polymerization using from 0.1 to 5 parts by weight of a molecular weight regulator, based on 100 parts by weight of monomers.

## Revendications

1. Utilisation d'une composition aqueuse, contenant 1 à 60% en poids d'un polymère A), élaboré à partir de :
a) 10 à 50% en poids d'un vinylaromatique ayant jusqu'à 20 atomes de carbone,
b) 45 à 75% en poids d'un hydrocarbure non aromatique avec deux doubles liaisons conjuguées,
c) 0 à 20% en poids d'un monomères soluble dans l'eau, avec une solubilité dans l'eau d'au moins 100 g par litre d'eau dans les conditions normales (21°C et 1 bar), où le monomère soluble dans l'eau ne présente pas de radical acide ou anhydride,
d) 0,1 à 4,5% en poids d'un monomère avec au moins un radical acide ou anhydride,
e) 0 à 30% en poids d'un monomère différent de a) à d),
et 40 à 99% en poids d'une charge B), où les données en poids concernant A) et B) se rapportent à la somme de A) et de B), comme adhésif pour revêtement de sol pour moquette ou revêtement de sol en PVC, revêtement de sol de type mousse avec face inférieure textile, voile polyester, revêtement en caoutchouc, revêtement textile, revêtement en feutre aiguilleté, revêtement en polyoléfine ou linoléum.

2. Utilisation d'une composition aqueuse selon la revendication 1, **caractérisée en ce que** la quantité pondérale du monomère c) se situe dans l'intervalle allant de 0,1 à 20% en poids.

3. Utilisation d'une composition aqueuse selon la revendication 1 ou 2, **caractérisée en ce que** la teneur en monomère c) se situe dans l'intervalle allant de 0,1 à 20% en poids et la teneur en monomère d), dans l'intervalle allant de 0,1 à 4% en poids.

4. Utilisation d'une composition aqueuse selon l'une des revendications 1 à 3, **caractérisée en ce que** le monomère c) consiste en un monomère avec un radical nitrile.

5. Utilisation d'une composition aqueuse selon l'une des revendications 1 à 4, **caractérisée en ce que** le polymère A) est réticulé et **en ce que** la valeur T2 (temps de relaxation magnétique nucléaire transversale des protons liés au polymère) comme mesure du taux de réticulation s'élève à au moins 10 ms.

6. Utilisation d'une composition aqueuse selon l'une des revendications 1 à 5, **caractérisée en ce que** la température de transition vitreuse du polymère A) se situe dans l'intervalle allant de -10 à -60°C.

7. Utilisation d'une composition aqueuse selon l'une des revendications 1 à 6, **caractérisée en ce que** le polymère A) se présente sous la forme d'une dispersion aqueuse de polymère.

8. Utilisation d'une composition aqueuse selon la revendication 7, **caractérisée en ce que** la dispersion polymère est obtenue par polymérisation en émulsion en utilisant 0,1 à 5 parties en poids d'un régulateur de poids moléculaire, sur base de 100 parties en poids de monomère.
